# EUROPÄISCHE PATENTSCHRIFT

(11) **EP 1 424 499 B1**
(45) Veröffentlichungstag und Bekanntmachung des Hinweises auf die Patenterteilung: **02.11.2006**
(21) Anmeldenummer: 03026090.5
(22) Anmeldetag: 13.11.2003
(51) Int. Cl.: F16B 5/02

(54) **Anordnung zum schwingungsgedämpften Verbinden zweier Bauteile**
System for vibration-damped connection of two elements
Système pour relier deux éléments en amortissant les vibrations

(30) Priorität: 26.11.2002 DE 20218301 U
(43) Veröffentlichungstag der Anmeldung: 02.06.2004
(73) Patentinhaber: Schwarz Verbindungs-Systeme GmbH, 75382 Althengstett (DE)
(72) Erfinder: Schwarz, Helmut, 71263 Weil der Stadt (DE); Homner, Bernhard, 75365 Calw (DE)
(74) Vertreter: Borchert, Uwe Rudolf

(56) Entgegenhaltungen:
- EP-A- 0 352 542
- DE-A- 10 048 889
- DE-U- 20 015 848
- DE-U- 29 920 495
- US-A- 5 876 023

## Beschreibung

Die Erfindung bezieht sich auf eine Anordnung zum schwingungsgedämpften Verbinden zweier Bauteile sowie auf Verbindungselemente für eine solche Anordnung.

Es gibt eine Vielzahl von lösbaren schwingungsdämpfenden Anordnungen zur Verbindung zweier Bauteile, welche z. B. auf einem Steck-, Rast-, Dreh- und Schraub-Prinzip beruhen. Derartige Verbindungsanordnungen haben neben dem schnellen Verbindungsaufbau den Vorteil einer einfachen Demontage für Wartungsarbeiten und Reparaturen. Sie werden insbesondere in Flugzeugen und Kraftfahrzeugen zur Befestigung von Innenverkleidungen benutzt. Die Schwingungsdämpfung spielt in diesem Zusammenhang eine ganz besondere Rolle, um die Übertragung von unerwünschten Schwingungen bzw. Vibrationen von einem Bauteil auf das andere zu verhindern oder zu verringern.

Aus der DE 100 48 889 ist eine Verbindungsvorrichtung zum schwingungsgedämpften Verbinden zweier Bauteile bekannt, die einen mit der Innenwandung eines offenen Hohlzylinders fest verbundenen Schwingungsdämpferring aufweist, wobei der Hohlzylinder an seinen Grundflächen jeweils einen nach außen weisendenden als Anlageflächen für das eine Bauteil der miteinander zu verbindenden Bauteile dienenden Rand aufweist. Mittels einer den Schwingungsdämpferring zentrisch durchsetzenden Schraube ist dieser mit dem einen Bauteil fest verschraubt, so dass das vom Hohlzylinder gehaltene Bauteil gegenüber dem anderen Bauteil schwingungsgedämpft gelagert ist.

Da die Befestigungsschraube direkt auf den am tragenden Bauteil anliegenden Schwingungsdämpferring einwirkt, kann dieser bei der Montage gequetscht werden, so dass die schwingungsdämpfende Wirkung ungünstig beeinflusst wird. Auch können mit einer solchen Anordnung keine lasttragenden Bauteile schwingungsgedämpft am tragenden Bauteil gelagert werden.

Für die schwingungsgedämpfte Lagerung von lasttragenden Bauteilen zeigt die US-A-5,876,023 eine Verbindungsvorrichtung, die ebenfalls einen mit der Innenwandung eines offenen Hohlzylinders fest verbundenen Schwingungsdämpferring aufweist, der über ein Verbindungselement, das an einem inneren Hohlzylinder des Schwingungsdämpferrings angreift, an einem der mit einander zu verbindenden Bauteile befestigt ist. Der äußere Hohlzylinder weist an einer seiner Grundflächen einen nach außen weisenden, als Anschlagfläche für das eine Bauteil der miteinander zu verbindenden Bauteile dienenden Rand auf, der als Anschlag beim Einstecken des Hohlzylinders in eine Bohrung des zugeordneten Bauteils dient und mit diesem verklebt ist.

Eine solche Verbindungsvorrichtung ist aufwendig in der Herstellung. Auch deren Monatage erfordert besondere Vorkehrungen, da vor dem Verbinden beider Bauteile der äußere Hohlzylinder des Schwingungsdämpferringes passgenau in das eine der beiden Bauteile einzufügen ist, ehe eine Verbindung mit dem zweiten Bauteil durchführbar ist. Insbesondere aber sind bei einer solchen Ausbildung Kippbewegungen des zu lagernden Bauteils bei der Lastaufnahme in Folge eines die Randfläche des äu-ßeren Hohlzylinders untergreifenden Fortsatzes des Schwingungsdämpferringes stark begrenzt.

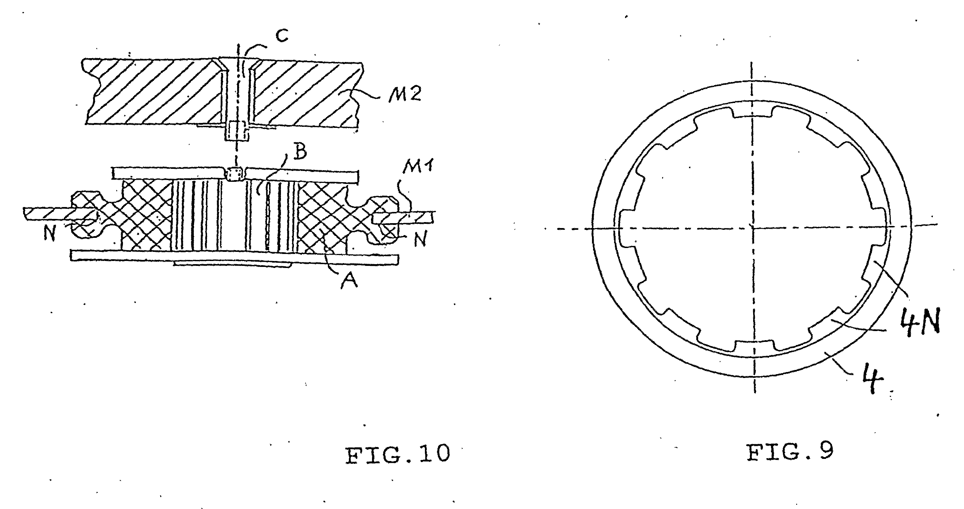

Eine weitere Verbindungsanordnung ist im Deutschen Gebrauchsmuster 299 20 495.2 beschrieben; sie wird auszugsweise in dieser Schrift in FIG.10 wiedergegeben:

Sie besteht aus einem Schwingungsdämpferring A und zwei miteinander verbindbaren und voneinander lösbaren Verbindungselementen B und C. Der Schwingungsdämpferring A weist eine externe periphere Nut N auf, welche das erste Bauteil M1 aufnimmt.

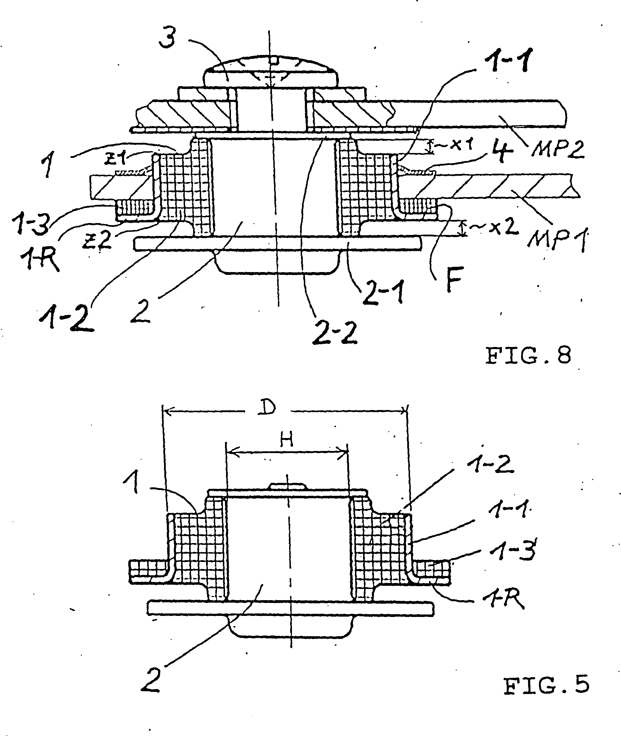

In der Öffnung des Schwingungsdämpferrings ist das erste Verbindungselement B für eine Gewindeverbindung angeordnet. Das zweite Verbindungselement D ist ein drehbarer mit dem zweiten Bauteil M2 verbundener Gewindestift. Besonderheiten des ersten Verbindungselementes werden noch in Zusammenhang mit FIG.5 und FIG. 8 erläutert.

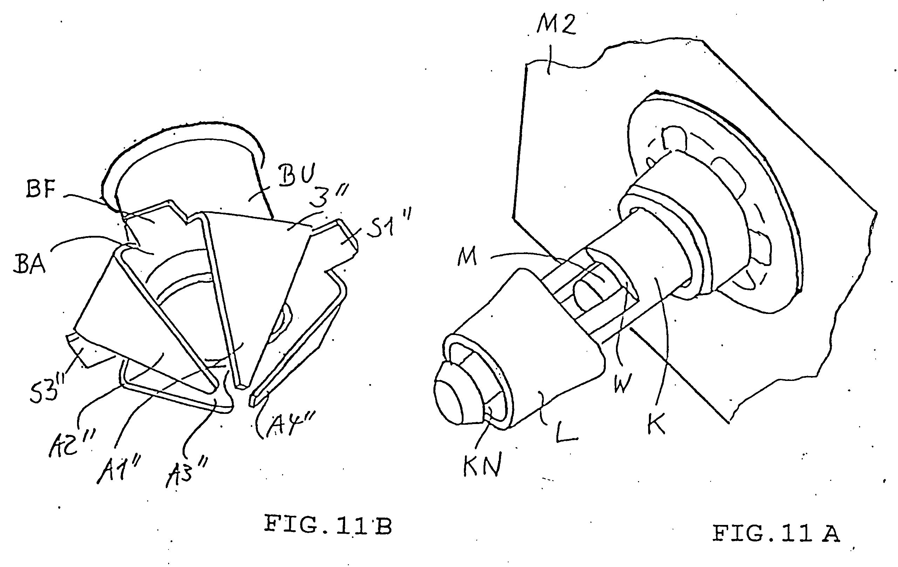

Eine andere schwingungsdämpfende lösbare Verbindungsanordnung zur Verbindung zweier Bauteile ist im Deutschen Gebrauchsmuster Nr. 200 15 848.1 beschrieben. Sie ist in dieser Schrift auszugsweise in den FIG.11A und 11B dargestellt.

FIG.11 A zeigt eine perspektivische Darstellung eines Halte-Bolzens K und eines auf ihm verschieblichen Entriegelungsteils L, welches durch einen axial im Halte-Bolzen K verschieblichen Auslösestift M betätigbar ist; Der Haltebolzen K ist mit einem zweiten Bauteil M2 verbunden; er weist einen Eingriffsbereich KN auf zum Eingriff von den Enden verschiedener Blattfederarme einer mit einem ersten Bauteil (nicht dargestellt) verbundenen Blattfederanordnung BF (FIG.11B).

Auslösestift und Entriegelungsteil sind nicht fest miteinander verbunden; sie wirken aber durch den Wandungsdurchbruch W des Haltebolzens K aufeinander ein zur Lösung der Halteverbindung durch Spreizen der Blattfederarme A1", A2", A3" und A4".

FIG. 11B zeigt eine perspektivische Darstellung einer Halte-Federanordnung BF, die mit einer hohlzylinderähnlichen Buchse BU zur Aufnahme eines Schwingungsdämpferringes (nicht dargestellt) verbunden ist. Aus Vereinfachungsgründen ist auch das mit dem Schwingungsdämpferring verbundene erste Bauteil nicht dargestellt.

Die Haltefederanordnung BF ist vorzugsweise einteilig ausgeführt. Sie weist ein Basisteil BA auf, von dessen Außenrand umgebogene sich zum freien Ende hin verjüngende Blattfederarme A1'', A2", A3" und A4" ausgehen, welche über bzw. unter dem Basisteil BA wie Teile eines gedachten Kegeldaches oder einer gedachten Pyramide mit offener Spitze für den Bolzendurchtritt angeordnet sind.

Die schwingungsdämpfenden Verbindungsanordnungen nach dem Stand der Technik weisen jedoch insbesondere Nachteile bei ihrer Montage auf.

Es ist deshalb Aufgabe der Erfindung, die bekannten Anordnungen mit einem Schwingungsdämpferring zum Verbinden zweier Bauteile derart weiterzubilden, dass unter Meidung der angeführten Nachteile eine einfache Montage ermöglicht wird, insbesondere im Zusammenwirken mit den mit der Anordnung zum schwingungsgedämpften Verbinden zweier Bauteile benötigten Verbindungselementen.

Diese Aufgabe ist erfindungsgemäß durch die Merkmale des Patentanspruchs 1 gelöst.

Weitere Merkmale der Erfindung ergeben sich aus den Unteransprüchen.

Durch die herausragenden Bereiche des Schwingungsdämpferrings ist ein besonders optimales schwingungsdämpfendes Verhalten der Anordnung garantiert bei einfacher Montage.

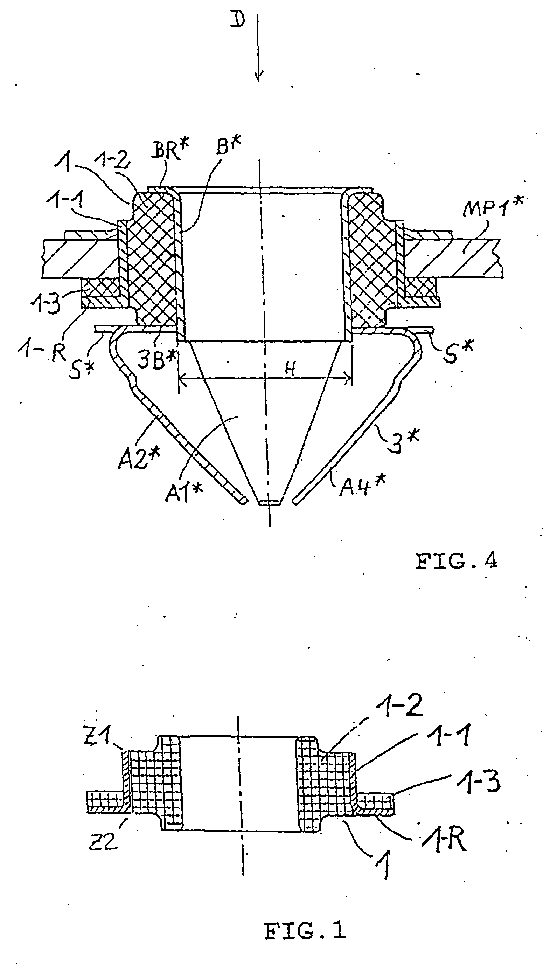

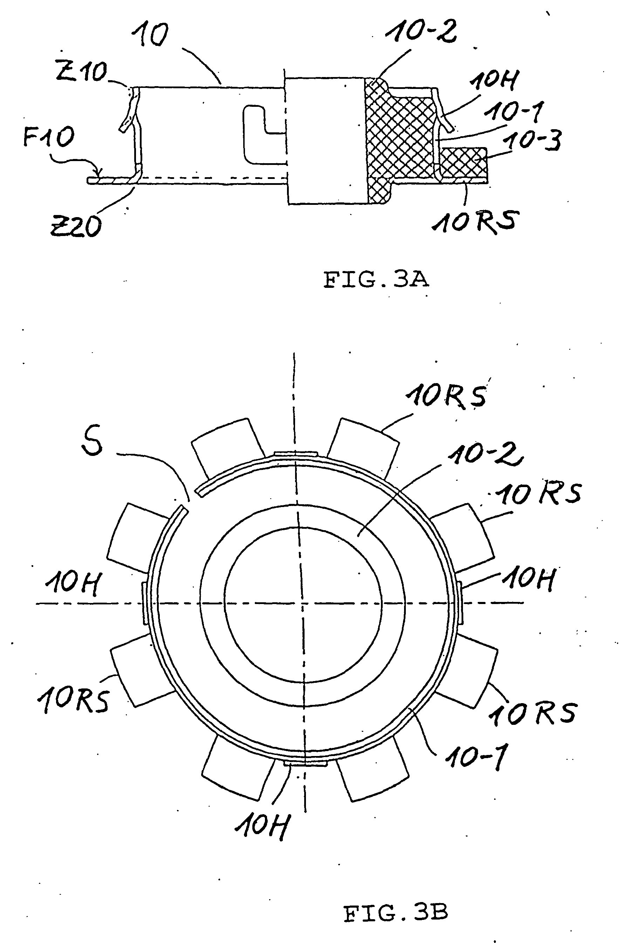

Ausführungsbeispiele der Erfindung sind in den Zeichnungen dargestellt und werden im folgenden näher beschrieben. Es zeigen:
FIG.1
   eine Schnittdarstellung der erfindungsgemäßen Schwingungsdämpferring-Einsatzanordnung mit einem geschlossenen Hohlzylinder-Mantel;
FIG.2
   eine Schnittdarstellung der erfindungsgemäßen Schwingungsdämpferring-Einsatzanordnung mit einem geschlossenen Hohlzylinder-Mantel, welcher eine äußere konzentrische Haltenut aufweist;
FIG.3A
   eine Schnittdarstellung der erfindungsgemäßen Schwingungsdämpferring-Einsatzanordnung mit einem geschlitzten Hohlzylindermantel und mit von ihm ausgehenden Federarmen zum Festhalten eines Bauteils;
FIG.3B
   eine Aufsicht auf die Schwingungsdämpferring-Einsatzanordnung gemäß FIG. 3A;
FIG. 4
   eine Schnittdarstellung der erfindungsgemäßen Schwingungsdämpferring-Einsatzanordnung gemäß FIG.1 mit einem als Haltefeder-Anordnung ausgebildeten ersten Verbindungselement;
FIG.5
   eine Schnittdarstellung der erfindungsgemäßen Schwingungsdämpferring-Einsatzanordnung gemäß FIG. 1 mit einem als Gewindeverbinder ausgebildeten ersten Verbindungselement;
FIG. 6
   eine Schnittdarstellung der erfindungsgemäßen Schwingungsdämpferring-Einsatzanordnung gemäß FIG.1 mit einem als Rast/Schraub-Verbinder ausgebildeten ersten Verbindungselement zur Verbindung mit einem als Gewindebolzen ausgebildeten zweiten Verbindungselement;
FIG.7
   eine Schnittdarstellung einer lösbaren Verbindungsanordnung für zwei Bauteile mit einer erfindungsgemäßen Schwingungsdämpferring-Einsatzanordnung mit einer an sich bekannten Haltefeder-Anordnung gemäß FIG. 4 und einem Haltebolzen;
FIG. 8
   eine Schnittdarstellung einer lösbaren Verbindungsanordnung für zwei Bauteile mit einer erfindungsgemäßen Schwingungsdämpferring-Einsatzanordnung mit einem an sich bekannten Gewinde-Verbinder gemäß FIG. 5 und einem Schraubbolzen;
FIG. 9
   eine Aufsicht auf einen Sicherungsring zur Fixierung eines Bauteils an der erfindungsgemäßen Schwingungsdämpferring-Einsatzanordnung gemäß FIG.1 , FIG. 2 oder FIG.8;
FIG.10 eine schematische Teil-Schnittdarstellung einer Verbindungsanordnung für zwei Gewinde-Verbindungselemente (nach dem Stand der Technik gemäß DE 299 20 495.2);
FIG.11 A
   eine perspektivische Darstellung eines Halte-Bolzens und eines auf ihm verschieblichen Entriegelungsteils, welches durch einen axial im Halte-Bolzen verschieblichen Auslösestift betätigbar ist (Stand der Technik gemäß DE 200 15 848.1);
FIG. 11 B
   eine perspektivische Darstellung einer Halte-Federanordnung , verbunden mit einer hohlzylinderähnlichen Buchse zur Aufnahme in einen Schwingungsdämpferring (Stand der Technik gemäß DE 200 15 848.1);

FIG.1 zeigt eine Schnittdarstellung der erfindungsgemäßen Schwingungsdämpferring-Einsatzanordnung 1 mit einem geschlossenen Hohlzylinder-Mantel 1-1.
Die Schwingungsdämpferring-Einsatzanordnung 1 (s. auch FIG.4,5 oder 6) umfaßt einen Schwingungsdämpferring 1-2, der innerhalb eines Hohlzylinders 1-1 angeordnet ist. Der Schwingungsdämpferring 1-2 ist mit der Innenwandung des Hohlzylinders 1-1 fest verbunden, z.B. durch Verkleben oder Vulkanisieren. Der Schwingungsdämpferring 1-2 besteht vorzugsweise aus Gummi oder Elastomer, der Hohlzylinder 1-1 vorzugsweise aus Metall, in bestimmten Ausführungsformen insbesondere aus Federstahl.

Der Hohlzylinder 1-1 hat an seiner unteren Öffnung Z2 einen nach außen weisenden Rand 1-R; anstelle des Randes können auch nach außen weisende Randsegmente vorgehen sein.

Die obere Randfläche ist mit einer Schicht/einem Belag 1-3 rutschhemmenden und oder schwingungsdämpfenden Materials (vorzugsweise Gummi oder Elastomer) versehen. Diese Schicht ist vorzugsweise mit dem Metall-Rand 1-R (bzw. den Randsegmenten) fest verbunden , z.B. durch Verkleben oder Vulkanisieren.
Die Schicht 1-3 hat die Aufgabe, eine Verdrehung des Schwingungsdämpferringes 1-2 gegenüber einem (im zusammengebauten Zustand) aufliegenden Bauteil zu verhindern. Die Schicht 1-3 kann zugleich auch schwingungsdämpfend wirken.

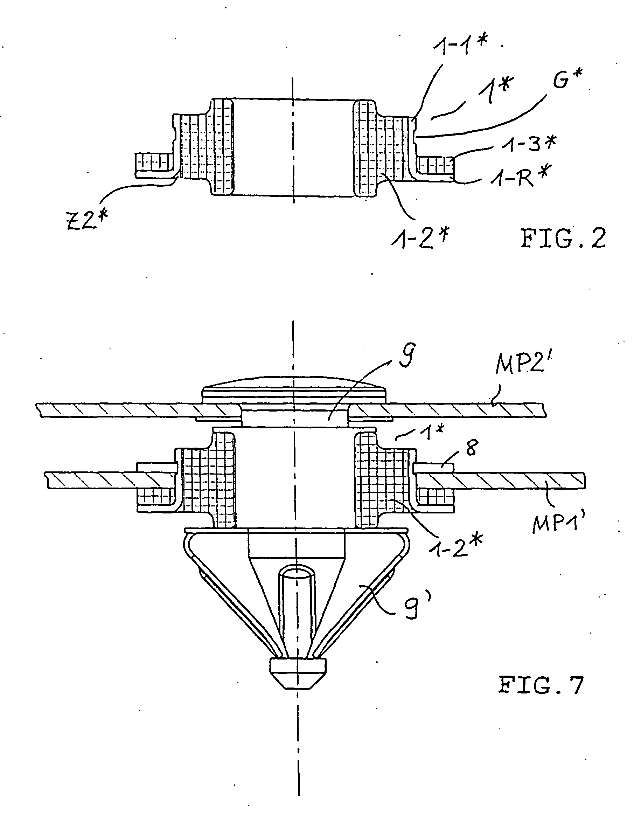

FIG. 2 zeigt eine Schnittdarstellung einer erfindungsgemäßen Schwingungsdämpferring-Einsatzanordnung gemäß FIG.1 mit einer Halte-Nut G*.
In FIG.2 ist die Schwingungsdämpferring-Einsatzanordnung mit 1*, der Schwingungsdämpferring mit 1-2*, der Hohlzylinder mit 1-1*, der Rand mit 1-R* und die Auflageschicht auf dem Rand mit 1-3* bezeichnet. Das untere Ende des Hohlzylinders, von dem der nach außen weisende Rand ausgeht, ist mit Z2* bezeichnet.
In diese Haltenut G* ist ein geschlossener oder offener Sicherungs- oder Halte-Ring 4 (FIG. 9) eingreifbar. Er hat nach innen gerichtete Federnasen 4N . Dieser Halte-Ring 4 dient der Fixierung eines zwischen ihm und dem Rand 1-R* anzuordnenden Bauteils. Aufgrund seiner nach innen gerichteten Federnasen 4N ist es auch möglich, diesen Haltering 4 in eine kraftschlüssige Verbindung mit dem Hohlzylinder (auch ohne Haltenut G*) zu bringen (s. auch FIG. 8).

FIG. 3A zeigt eine Schnittdarstellung der erfindungsgemäßen Schwingungsdämpferring-Einsatzanordnung mit einem geschlitzten Hohlzylindermantel; während

FIG.3B eine Aufsicht auf die Schwingungsdämpferring-Einsatzanordnung gemäß FIG. 3A zeigt.

In dieser Ausführungsform der erfindungsgemäßen Schwingungsdämpferring-Einsatzanordnung gehen vom Hohlzylinder 10-1 federnde Haltearme 10 H aus. Der Hohlzylinder ist mit 10-1, der Schwingungsdämpferring mit 10-2 die Randsegmente des Hohlzylinders sind mit 10RS und die darauf angeordnete rutschhemmende und/oder schwingungsdämpfende Schicht mit 10-3 bezeichnet.
Die freien Enden der Haltearme 10H dienen der Fixierung eines zwischen ihnen und den Randsegmenten 10RS anordnungsbaren Bauteils. Hierzu wird die Schwingungsdämpferring-Einsatzanordnung zunächst bis zu den als Anschlag dienenden Randsegmenten durch eine Bohrung im Bauteil (nicht dargestellt) gesteckt, bis die federnden Haltearme die Oberseite des Bauteils übergreifen.

Der Schlitz S im Hohlzylinder 10-1 ermöglicht eine einfache Herstellung als zunächst planes Stanzteil, und ein leichtes elastisches Deformieren bei der Montage der hohlzylinderförmigen Schwingungsdämpferring-Einsatzanordnung.

Der Schwingungsdämpferring 1-2 - s. FIG.8- steht an beiden Enden (Grundflächen Z1, Z2) des Hohlzylinders 1-1 aus diesem um x1 bzw.x2 heraus. Dadurch sind eine sichere Schwingungsdämpfung und Montage gewährleistet.

FIG. 4 zeigt eine Schnittdarstellung der erfindungsgemäßen Schwingungsdämpferring-Einsatzanordnung gemäß FIG.1 mit einem als Haltefeder-Anordnung 3* ausgebildeten ersten Verbindungselement.
Eine solche Haltefeder-Anordnung für sich gesehen ist als Stand der Technik aus dem deutschen Gebrauchsmuster 20015848.1 bekannt (s. auch FIG. 11B).
In der Öffnung der Schwingungsdämpferring-Einsatzanordnung 1 (sie entspricht der in FIG. 1 gezeigten Darstellung und trägt auch die gleichen Bezugszeichen) ist eine hohlzylinderähnliche Buchse B* angeordnet; ihr oberer Rand BR* umgreift den oberen Öffnungsrand der Schwingungsdämpferring-Einsatzanordnung , am unteren Öffnungsrand ist die Buchse mit dem Basisteil 3B* der Haltefederanordnung 3* verbunden. Ihre einzelnen Federarme sind mit A1*, A2*, (A3* verdeckt, deshalb nicht sichtbar) und A4* gekennzeichnet. Weitere Einzelheiten zu der Haltefeder-Anordnung sind in Zusammenhang mit FIG. 11B erläutert. Die Haltefederanordnung dient dem Eingriff in einen in Richtung D in die Buchse B* einführbaren Haltebolzens, über den in Zusammenhang mit den FIG. 11A bzw. FIG. 7 weitere Einzelheiten genannt werden.

FIG.5 zeigt eine Schnittdarstellung einer erfindungsgemäßen Schwingungsdämpferring-Einsatzanordnung gemäß FIG. 1 mit einem als Gewindeverbinder ausgebildeten ersten Verbindungselement. Ein solcher Gewindeverbinder für sich gesehen ist als Stand der Technik aus dem deutschen Gebrauchsmuster 299 20 495.2 bekannt (s. auch FIG. 10).
Er weist durch Federkraft gegeneinandergedrückte ineinandergreifende Rastringe auf, von denen der erste mit einem gedachten zweiten als Gewindestift ausgeführten Verbindungselement verbindbar und mit ihm drehbar ist und von denen der zweite in Achsenrichtung federkraftbeaufschlagt gegen den ersten verschiebbar und dabei nicht drehbar angeordnet ist.

FIG.8 zeigt eine Schnittdarstellung einer lösbaren Verbindungsanordnung für zwei Bauteile. Bei dieser Verbindungsanordnung sitzt die Schwingungsdämpferring-Einsatzanordnung gemäß FIG. 5 in der Bohrung eines ersten Bauteils MP1.
Der Randbereich der Bohrung ist zwischen dem beschichteten (1-3) Rand 1R des Hohlzylinder-Teils 1-1 und dem Sicherungsring 4 (s. FIG. 9) angeordnet.
Der Gewindebolzen 3 (vergleiche auch C in FIG.10) verläuft durch eine Bohrung des zweiten Bauteils MP2; er ist mit dem Gewindeverbinder 2 in der Schwingungsdämpferring-Einsatzanordnung 1 verbindbar. Beide Bauteile MP1 und MP2 sind bei vollzogener Gewindeverbindung (3/2) über den Schwingungsdämpferring 1-2 miteinander verbunden. Der Schwingungsdämpferring 1-2 (FIG.8) ragt aus beiden Öffnungen Z1 und Z2 des Hohlzylinders 1-1 um das Stück X1 bzw X2 heraus.
Durch diese herausstehenden Bereiche X1 und X2 ist ein besonders optimales schwingungsdämpfendes Verhalten garantiert, dabei dürfen die Sicherungscheiben (2-1 und 2-2 in FIG.8) nicht gleichzeitigen Kontakt zum Hohlzylinder 1-1 haben.

FIG.7 zeigt eine Schnittdarstellung einer lösbaren Verbindungsanordnung für zwei Bauteile MP1' und MP2'. Sie umfaßt die erfindungsgemäße Schwingungsdämpferring-Einsatzanordnung 1* gemäß FIG. 4 mit einer an sich bekannten Haltefeder-Anordnung 9' und einem Haltebolzen 9.
Das Bauteil MP1' weist eine Bohrung auf. Der Randbereich dieser Bohrung ist zwischen dem Sicherungsring 4 und dem Rand 1-R* des Hohlzylinders angeordnet. Der Haltebolzen 9 , z.B. in einer Ausführung gemäß FIG. 11A , verläuft durch die Bohrung im zweiten Bauteil MP2' und durch die Öffnung des Schwingungsdämpferringes 1-2*, welcher in der Bohrung des ersten Bauteils angeordnet ist. Der Bolzen wird durch die Enden der Haltefedern , welche in seinen Eingriffsbereich KN eingreifen, mit der Haltefederanordnung verbunden.

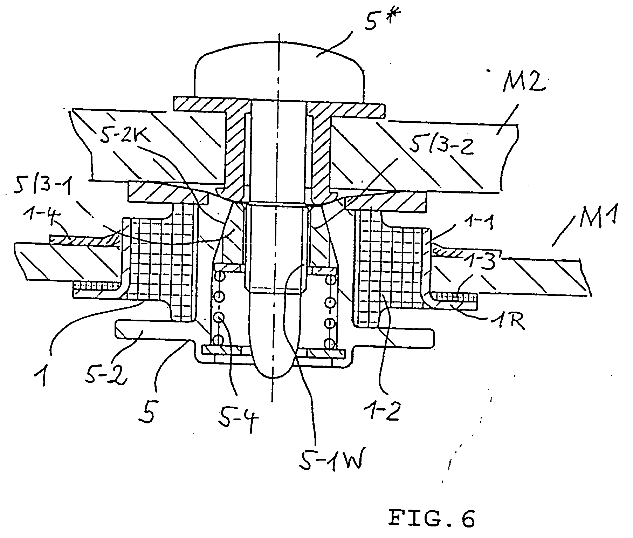

FIG.6 zeigt eine Schnittdarstellung der erfindungsgemäßen Schwingungsdämpferring-Einsatzanordnung gemäß FIG.1 mit einem als Rast/Schraub-Verbinder 5 ausgebildeten ersten Verbindungselement zur Verbindung mit einem als Gewindebolzen 5* ausgebildeten zweiten Verbindungselement. Das erste Verbindungselement als Teil einer Rast-Schraub-Verbindung ist ein in der Öffnung des Schwingungsdämpferringes angeordneter bekannter Bolzen-Verbinder 5.
Er weist ein Gehäuse 5-2 auf mit einem sich zu seiner - der Aufnahme des Halte-Schraubbolzen-Endes dienenden- Öffnung hin verjüngenden Innenkonus 5-2K. Der Halte-Schraubbolzen 5* ist das zweite Verbindungselement. In dem Gehäuse 5-2 sind mindestens zwei schalenförmige Gewindemutter-Segmente 5/3-1, 5/3-2 angeordnet, deren Außen-Mäntel jeweils eine dem Innenkonus 5-2K angepaßte Schräge aufweisen. Die Gewindemutter-Segmente sind mit ihrem auf dem Innenkonus 5-2K in Richtung der Gehäuseöffnung oder entgegengesetzt dazu verschiebbar.
Die Gewindemutter-Segmente werden in Richtung der Gehäuseöffnung feder(5-4)kraftbeaufschlagt. Der gedachte Halte-Schraubbolzen 5* ist zwischen die verschiebbaren Gewindemutter-Segmente gegen die Feder (5-4)kraft derart eindrückbar , daß sein Gewinde 5-1W in das der Gewindemutter-Segmente einrastbar ist.

Das Halte-Drehbolzen-Gewinde ist durch Drehung des Halte-Schraubbolzens 5* mit dem Gewinde der Gewindemutter-Segmente gewindeverbindbar.
Das erste Bauteil M1 ist im Randbereich einer Bohrung zwischen dem Rand 1-R der Schwingungsdämpferring-Einsatzanordnung und einem Sicherungsring 1-4 angeordnet; das zweite Bauteil M2 wird im Randbereich einer Bohrung von einer Führungsbuchse für den Halte-Schraub-Bolzen 5* umfaßt.

Als erste und zweite Verbindungselemente können auch beliebige andere Ausführungsformen als in den FIG. 5,6 oder 4 gezeigt, verwendet werden.

## Patentansprüche

1. Anordnung zum schwingungsgedämpften Verbinden zweier Bauteile (MP1, MP2) mit einem mit der Innenwandung eines offenen Hohlzylinders (1-1) fest verbundenen Schwingungsdämpferring (1-2) der über Verbindungselemente (2, 3, 5, 9, 9') an einem der miteinander zu verbindenden Bauteile (MP1, MP2) befestigt ist, wobei der Hohlzylinder (1-1) an mindestens einer seiner Grundflächen (Z2) einen nach außen weisenden, als Anschlagfläche für das eine Bauteil der miteinander zu verbindenden Bauteile (MP1, MP2) dienenden Rand (1-R) aufweist, **dadurch gekennzeichnet, dass** der Schwingungsdämpferring (1-2) über die Grundflächen (Öffnungen Z1, Z2) des Hohlzylinders (1-1) um ein Stück (X1, X2) herausragt, dass der Schwingungsdämpferring (1-2) über Verbindungselemente (2, 3, 5, 9, 9') mit dem einen (MP2) der Bauteile (MP1, MP2) verbunden ist und dass das zweite Bauteil (MP1) den Hohlzylinder (1-1) mittels einer Bohrung umfassend unter Zwischenfügung eines rutschhemmenden und/oder schwingungsdämpfenden Materials (1-3, 1-3*, 10-3) auf dem Rand (1-R) der einen Grundfläche (Z2) aufliegend gelagert ist.

2. Anordnung nach Anspruch 1, **dadurch gekennzeichnet, dass** der Hohlzylinder (10-1) einen geschlitzten (S) Zylindermantel hat.

3. Anordnung nach Anspruch 1, **dadurch gekennzeichnet, dass** der Hohlzylinder (1-1*) eine äußere konzentrische Halte-Nut (G*) aufweist.

4. Anordnung nach Anspruch 3, **dadurch gekennzeichnet, dass** in diese Halte-Nut (6*) ein geschlossener oder offener Sicherungs- oder Halte-Ring (4) eingreifbar ist.

5. Anordnung nach Anspruch 4, **dadurch gekennzeichnet, dass** der Sicherungs- oder Halte-Ring (4) nach innen gerichtete Federnasen (4N) aufweist.

6. Anordnung nach Anspruch 1, **dadurch gekennzeichnet, dass** das erste Verbindungselement Teil (2) einer lösbaren Gewindeverbindung, Teil(3*) einer lösbaren Halte-Feder(9')/Halte-Bolzen(9)-Verbindung oder Teil(5) einer lösbaren Halte-Schraub-Bolzen (5*)/ Rast-Schraub-Verbindung ist.

7. Anordnung nach Anspruch 6, **dadurch gekennzeichnet, dass** das erste Verbindungselement als Teil einer Gewindeverbindung eine an sich bekannte Gewindeverbindungs-Sicherung ist, welche zwei durch Federkraft gegeneinandergedrückte ineinandergreifende Rastringe aufweist, von denen der erste mit einem gedachten zweiten als Gewindestift ausgeführten Verbindungselement verbindbar und mit ihm drehbar ist und von denen der zweite in Achsenrichtung federkraftbeaufschlagt gegen den ersten verschiebbar und dabei nicht drehbar angeordnet ist.

8. Anordnung nach Anspruch 6, **dadurch gekennzeichnet, dass** das erste Verbindungselement als Teil (9') einer Haltefeder/ Haltebolzen-Verbindung eine an sich bekannte Haltefederanordnung (9') ist, welche an oder in einer Öffnung des Schwingungsdämpferringes(1-2^{*}) angeordnet ist, wobei die Haltefederanordnung (9';3*) ein Basisteil (3B*) mit einer Öffnung für den Durchtritt des gedachten Halte-Bolzens aufweist, wobei vom Aussenrand des Basisteils umgebogene sich zu ihren freien Enden hin verjüngende Federarme (A1*, A2*, A3*, A4*) ausgehen, welche über bzw.unter dem Basisteil (3B*) wie Teile eines gedachten Kegeldaches oder einer gedachten Pyramide mit offener Spitze für den Bolzendurchtritt angeordnet sind.

9. Anordnung nach Anspruch 8, **dadurch gekennzeichnet, dass** die Haltefeder-Anordnung (3*) mit einer in der Öffnung des Schwingungsdämpferringes angeordneten Buchse (B*) verbunden ist.

10. Anordnung nach Anspruch 8, **dadurch gekennzeichnet, dass** das Basisteil (3B*) der Haltefeder-Anordnung (3*) nach außen weisende Vorsprünge (S*) aufweist, die über den äußeren Durchmesser des Hohlzylinders (1-1) hinausreichen.

11. Anordnung nach Anspruch 7, **dadurch gekennzeichnet, dass** das zweite an sich bekannte Verbindungselement (3) ein drehbarer mit dem zweiten Bauteil (MP2) verbindbarer Gewindestift ist.

12. Anordnung nach Anspruch 8, **dadurch gekennzeichnet, dass** das zweite an sich bekannte Verbindungselement ein Bolzen (9) ist mit einem Eingriffsbereich für die Federenden der Haltefederanordnung (9').

13. Anordnung nach Anspruch 9, **dadurch gekennzeichnet, dass** das zweite Verbindungselement ein mit dem zweiten Bauteil (M2) verbindbarer Halte-Schraubbolzen (5*) ist.

## Claims

1. An assembly for the vibration-damped connection of two components (MP1,MP2) with a vibration damper ring (1-2) which is securely connected to the inner wall of an open hollow cylinder (1-1) and which is fastened via connecting elements (2,3,5,9,9') to one of the components (MP1, MP2) to be connected to one another, wherein on at least one of its base surfaces (22) the hollow cylinder (1-1) has an outwardly facing rim (1-R) serving as an abutment surface for one component of the components (MP1,MP2) to be connected to one another, **characterised in that** the vibration damper ring (1-2) projects over the base surfaces (openings Z1,Z2) of the hollow cylinder (1-1) to an extent (X1,X2), **in that** the vibration damper ring (1-2) is connected via connecting elements (2,3,5,9,9') to one (MP2) of the components (MP1,MP2), and **in that** the second component (MP1), which envelopes the hollow cylinder (1-1) by means of a bore with interposition of a non-slip and/or vibration damping material (1-3,1-3*,10-3), is mounted resting on the rim (1-R) of one base surface (Z2).

2. An assembly according to Claim 1, **characterised in that** the hollow cylinder (10-1) has a slotted (S) outer cylindrical surface.

3. An assembly according to Claim 1, **characterised in that** the hollow cylinder (1-1*) has an outer concentric retaining groove (G*).

4. An assembly according to Claim 3, **characterised in that** a closed or open circlip or retaining ring (4) can engage in this retaining groove (6*).

5. An assembly according to Claim 4, **characterised in that** the circlip or retaining ring (4) has inwardly directed spring lugs (4N).

6. An assembly according to Claim 1, **characterised in that** the first connecting element is part (2) of a releasable threaded joint, part (3*) of a releasable retaining spring (9')/retaining stud (9) connection or part (5) of a releasable retaining screw stud (5*)/detent-screw connection.

7. An assembly according to Claim 6, **characterised in that** the first connecting element as part of a threaded joint is a per se known threaded joint locking device which has two interlocking detent rings which are pressed against one another by spring force and the first of which can be connected with an imaginary second connecting element in the form of a threaded pin and is able to rotate therewith, and the second of which can be displaced in an axial direction spring-loaded against the first detent ring but is arranged to be non-rotatable.

8. An assembly according to Claim 6, **characterised in that** the first connecting element as part (9') of a retaining spring/retaining stud connection is a per se known retaining spring assembly (9') which is arranged at or in an opening of the vibration damper ring (1-2*), wherein the retaining spring assembly (9';3*) has a base part (3B*) with an opening for the passage of the imaginary retaining pin, wherein bent-over spring arms (A1*,A2*,A3*,A4*) tapering towards their free ends extend from the outer edge of the base part and are arranged over or under the base part (3B*) as parts of an imaginary conical roof or an imaginary pyramid with an open tip for the passage of the stud.

9. An assembly according to Claim 8, **characterised in that** the retaining spring assembly (3*) is connected to a bush (B*) provided in the opening in the vibration damper ring.

10. An assembly according to Claim 8, **characterised in that** the base part (3B*) of the retaining spring assembly (3*) has outwardly pointing projections (S*) which extend beyond the outer diameter of the hollow cylinder (1-1).

11. An assembly according to Claim 7, **characterised in that** the second, per se known connecting element (3) is a threaded pin which can be connected rotatably with the second component (MP2).

12. An assembly according to Claim 8, **characterised in that** the second, per se known connecting element is a stud (9) with an engagement zone for the spring ends of the retaining spring assembly (9').

13. An assembly according to Claim 9, **characterised in that** the second connecting element is a retaining threaded stud (5*) which can be connected to the second component (M2).

## Revendications

1. Dispositif pour relier deux pièces (MP1, MP2) en amortissant les vibrations, comprenant une bague d'amortissement de vibrations (1-2) solidaire de la paroi intérieure d'un cylindre creux (1-1) ouvert, qui par des éléments de liaison (2, 3, 5, 9, 9') est fixée à l'une des pièces (MP1, MP2) à relier l'une à l'autre, le cylindre creux (1-1) présentant au niveau d'au moins une de ses surfaces de base (Z2) un bord (1-R) dirigé vers l'extérieur servant de surface de butée pour l'une des pièces (MP1, MP2) à relier l'une à l'autre,
**caractérisé en ce que**
la bague d'amortissement de vibrations (1-2) dépasse d'un bout (X1, X2), les surfaces de base (ouvertures Z1, Z2) du cylindre creux (1-1), la bague d'amortissement de vibrations (1-2) est reliée à l'une (MP2) des pièces (MP1, MP2) par des éléments de liaison (2, 3, 5, 9, 9'), et la deuxième pièce (MP1) entourant le cylindre creux (1-1) au moyen d'un alésage est placée sur le bord (1-R) de l'une des surfaces de base (Z2) en intercalant un matériau antidérapant et/ ou antivibratoire (1-3, 1-3*, 10-3).

2. Dispositif selon la revendication 1,
**caractérisé en ce que**
le cylindre creux (10-1) présente une enveloppe cylindrique fendue (S).

3. Dispositif selon la revendication 1,
**caractérisé en ce que**
le cylindre creux (1-1*) présente une rainure de maintien concentrique extérieure (G*).

4. Dispositif selon la revendication 3,
**caractérisé en ce qu'**
une bague de blocage ou de maintien (4) fermée ou ouverte peut s'engager dans cette rainure de maintien (6*).

5. Dispositif selon la revendication 4,
**caractérisé en ce que**
la bague de blocage ou de maintien (4) présente des nez élastiques (4N) dirigés vers l'intérieur.

6. Dispositif selon la revendication 1,
**caractérisé en ce que**
le premier élément de liaison est un composant (2) d'une liaison filetée amovible, un composant (3*) d'une liaison ressort de maintien (9')/boulon de maintien (9) amovible ou un composant (5) d'une liaison boulon fileté de maintien (5*)/vis de blocage amovible.

7. Dispositif selon la revendication 6,
**caractérisé en ce que**
le premier élément de liaison en tant que composant d'une liaison filetée est un dispositif de blocage connu en soi qui présente deux bagues d'arrêt engrenées l'une dans l'autre pressées l'une contre l'autre, dont la première peut être reliée à un deuxième élément de liaison imaginé en forme de tige filetée et est rotative avec celui-ci, et dont la deuxième peut être déplacée dans la direction axiale, sollicitée par force élastique contre la première en n'étant pas disposée en rotation.

8. Dispositif selon la revendication 6,
**caractérisé en ce que**
le premier élément de liaison en tant que composant (9') d'une liaison ressort de maintien/boulon de maintien est un dispositif de ressort de maintien (9') connu en soi disposé sur ou dans une ouverture de la bague d'amortissement de vibrations (1-2*), le dispositif de ressort de maintien (9' ; 3*) présentant une partie de base (3B*) munie d'une ouverture pour le passage du boulon de maintien imaginé, depuis le bord extérieur de la partie de base partant des bras élastiques (A1*, A2*, A3*, A4*) pliés se rétrécissant vers leurs extrémités libres et disposés au-dessus ou en dessous de la partie de base (3B*) comme parties d'un toit conique imaginé ou d'une pyramide imaginée à sommet ouvert pour le passage du boulon.

9. Dispositif selon la revendication 8,
**caractérisé en ce que**
le dispositif de ressort de maintien (3*) est relié à une douille (B*) disposée dans l'ouverture de la bague d'amortissement de vibrations.

10. Dispositif selon la revendication 8,
**caractérisé en ce que**
la partie de base (3B*) du dispositif de ressort de maintien (3*) présente des saillies (S*) dirigées vers l'extérieur qui dépassent du diamètre extérieur du cylindre creux (1-1).

11. Dispositif selon la revendication 7,
**caractérisé en ce que**
le deuxième élément de liaison (3) connu en soi est une tige filetée rotative pouvant être reliée à la deuxième pièce (MP2).

12. Dispositif selon la revendication 8,
**caractérisé en ce que**
le deuxième élément de liaison connu est un boulon (9) muni d'une zone d'engrènement pour les extrémités de ressort du dispositif de ressort de maintien (9').

13. Dispositif selon la revendication 9,
**caractérisé en ce que**
le deuxième élément de liaison est un boulon fileté de maintien (5*) pouvant être relié à la deuxième pièce (M2).
